# EUROPEAN PATENT APPLICATION

(11) **EP 4 470 997 A1**
(43) Date of publication of application: **04.12.2024**
(21) Application number: 23798876.1
(22) Date of filing: 10.04.2023
(51) Int. Cl.: C05D 9/02

(54) **IRON SUPPLY AGENT FOR PLANT GROWTH**

(71) Applicant: Sobue Clay Co., Ltd., Minato-ku Nagoya-shi, Aichi 455-0071 (JP)
(72) Inventor: SOBUE Umeo, Nagoya-shi, Aichi 455-0071 (JP); SASAMOTO Daisuke, Nagoya-shi, Aichi 455-0071 (JP); SASAMOTO Hirohiko, Chita-gun, Aichi 470-2102 (JP)
(74) Representative: Hofstetter, Schurack & Partner
(86) International application number: PCT/JP2023/014472
(87) International publication number: WO 2024/214128

(57) **Abstract**

[Problem to be solved]

An iron supply agent is provided wherein a novel chelating agent is combined to enable the low-cost, long-term suppression of precipitation of iron ions (Fe2⁺ or Fe3⁺) by oxidation, and increase intake efficiency when supplying iron to plants.

[Means of solving the problems]

An iron supply agent consists of sodium iron citrate aqueous solution prepared by stirring and mixing citric acid, water and iron combined with sodium bicarbonate, and a chelating agent mixed with the aqueous solution of sodium iron citrate, wherein the chelating agent is lignin sulfonic acid derived from lignin waste water.

## Description

### [Field of the Invention]

The present invention relates to an iron supply agent for plant growth that can efficiently and at low cost supply iron, which is an essential element for the growth of various marine plants including seaweeds such as wakame and kelp living in seawater, and terrestrial plants such as vegetables and fruit trees grown in the soil.

In the following, 'iron supply agents for plant growth' will be referred to simply as 'iron supply agents'.

### [Description of the Prior Art]

Iron is a trace-essential element essential for the growth of the various plants mentioned above, and iron deficiency is known to cause various growth defects such as poor photosynthesis and poor flower bud formation.

For example, with regard to marine plants, in recent years, coastal areas have been experiencing so-called rocky-shore denudation, in which the growth and reproduction of seaweeds are reduced and covered with calcareous algae due to iron deficiency and red tides due to the death of plankton, resulting in a marked decrease in fish and shellfish resources such as sea urchins, oysters, abalones and fish, which feed on these marine plants..

In the past, water-soluble iron fulvate (a chelated compound of fulvic acid and divalent iron Fe²⁺) produced in the humus soils of forests flowed into coastal waters via rivers, thereby suppressing the occurrence of the rocky-shore denudation and red tides caused by the death of plankton. However, in recent years, due to forest degradation and other factors, the amount of iron fulvate eluted has decreased, and the occurrence of the rocky-shore denudation and red tides has increased.

The same applies to terrestrial plants, where iron deficiency causes poor growth of shoots and roots, poor photosynthesis, poor synthesis of amino acids and proteins for nitrogen assimilation, and poor flower bud formation, resulting in reduced yield.

In response to such problems, for example, with regard to marine plants, technologies have been proposed to promote the growth of seaweeds by attaching iron containing ferrous ions (Fe²⁺), or by sinking concrete mixed with coal ash (fly ash) in the sea, as shown in Patent Documents 1 to 3.

However, even if divalent iron ions (Fe²⁺) that can be ingested by photosynthesis organisms are eluted, they are easily oxidized by oxygen in the water and transition to trivalent iron ions (Fe³⁺), which are inefficiently absorbed by marine plants, resulting in granular iron (Fe₂(OH)₃), which is easily precipitated, and this makes it difficult for marine plants to ingest.

Therefore, it is difficult to supply iron ions to marine plants efficiently using conventional technology, and if iron is to be supplied to the aquatic environment, it must be supplied in such a way that the iron ions are not easily oxidized, that is, they remain water-soluble state for a long period of time and iron precipitation is reduced.

The same applies to terrestrial plants. For example, in the iron supply agent shown in Patent Document 4, divalent iron ions (Fe²⁺) are easily oxidized to trivalent iron ions (Fe³⁺), making it difficult for terrestrial plants to ingest iron efficiently for a long period.

The applicant has proposed an iron supply agent for growing plants and animals that can increase the concentration of divalent iron ions (Fe²⁺) in aqueous solution by Patent Application 2023-518899, but in order to use this iron supply agent for both marine and terrestrial plants, it is necessary to prevent the divalent iron ions (Fe²⁺) from oxidizing over a long period of time to become trivalent iron ions (Fe³⁺) by oxidation.

It is known that the long-term oxidation resistance of divalent iron ions (Fe²⁺) can be improved, for example, by adding chelating agents such as fulvic acid or humic acid to aqueous solutions of the iron supply agents.

However, chelating agents such as fulvic acid and humic acid are not only themselves extremely costly, but when they are used for growing the above-mentioned plants, it is necessary to use a large amount of iron supply agents, and a marked increase in plant growth costs is inevitable. In particular, when used for the growth of marine plants, it is necessary to add even larger quantities to seawater than for terrestrial plants, thus the growth efficiency of iron supply agents is extremely poor and growth costs are extremely high.

Humic acids (fulvic and humic acids) extracted from humic substances such as bark compost and humus with highly alkaline ionized water (approx. pH 13) are known as chelating agents to replace fulvic and humic acids that can reduce the above growth costs. In the case of iron supply agents using the humic acids, it is possible to effectively inhibit oxidation by chelating divalent iron ions (Fe²⁺), but when extracting humic acids, a large amount of humic substance residues are discharged as waste, which causes another problem of time and cost for disposal, making them unsuitable for use as chelating agents.

### [Prior art documents]

### [Patent documents]

[Patent document 1] JP 2640926B
[Patent document 2] JP 1996-89126A
[Patent document 3] JP 2002-45078A
[Patent document 4] JP 4096207B

### [Summary of the Invention]

### [Problems to be solved by the invention]

Fulvic acid and humic acid as chelating agents, which are mixed with iron supply agents to inhibit the oxidation of divalent iron ions (Fe²⁺), are expensive and require large amounts of such agents when used for plant growth, which significantly increases plant growth costs.

In the case of using humic acid extracted from humic substances with highly alkaline ionized water as a chelating agent for iron supply agents, a large amount of humic substance residues are generated, which require time and cost for disposal.

### [Means for solving the problems]

The most characteristic feature of the present invention is that an aqueous solution of sodium ferrous citrate, prepared by stirring and mixing citric acid, water and iron, and combining with sodium bicarbonate, is mixed with a chelating agent, wherein the chelating agent is lignin sulfonic acid derived from lignin waste water.

### [Advantageous effects of the Invention]

The present invention can provide an iron supply agent in which a novel chelating agent is combined to enable low-cost and long-term suppression of precipitation of iron ions (Fe²⁺ or Fe³⁺) by oxidation, and increase intake efficiency when supplying iron to plants.

### [Brief Description of the Drawings]

Fig. 1 is a diagram showing the concentration of iron ions during the production of sodium iron citrate 1.
Fig. 2 is a diagram showing the concentration of iron ions during the production of sodium iron citrate 2.
Fig. 3 is a diagram showing the concentration of iron ions during the production of sodium iron citrate 3.
Fig. 4 is a diagram showing the precipitation rate of Fe ions when conventional iron supply agents are mixed with seawater.
Fig. 5 is a diagram showing an example of the preparation of an iron supply agent according to the present invention.
Fig. 6 is a diagram showing the Fe ion precipitation rate when an iron supply agent having an Fe concentration of 44 ppm is mixed with seawater.
Fig. 7 is a diagram showing the Fe ion precipitation rate when an iron supply agent having a Fe concentration of 22 ppm is mixed with seawater.
Fig. 8 is a diagram according to Comparative Example 1.
Fig. 9 is a diagram according to Comparative Example 2.

### [Best form for carrying out the Invention]

The best form of the present invention is obtained by mixing a chelating agent consisting mainly of lignin sulfonic acid derived from lignin waste solution with a sodium iron citrate solution in which sodium bicarbonate is combined with iron citrate solution prepared by stirring and mixing citric acid, water and iron.

### Example 1

The present invention will now be described in further detail with reference to specific examples.

### [Iron supply agent]

The iron supply agent is produced by mixing lignin sulfonic acid with an aqueous solution of sodium iron citrate obtained by combining iron citrate solution prepared by mixing citric acid, water and iron with baking soda (sodium bicarbonate, NaHCOs)

### (Citric acid)

The acid used to prepare the aqueous solution is limited to citric acid, which has no environmental impact and is safe for use, wherein the citric acid is a solid or powder having citric acid as the main ingredient (usually having a purity of 99% or more), and the particle shape is not particularly limited if it is of such purity, but it is preferable that the fine particle size is easily soluble in water.

An aqueous solution of citric acid prepared by dissolving citric acid in water, described below, has a pH adjusted to 1.0-2.0 and has no pungent odor, and when iron is added to produce an aqueous solution of iron citrate, the concentration of ferrous ions (Fe²⁺) relative to the acid concentration can be particularly increased.

### (Water)

The water in which the citric acid is dissolved is not particularly limited and may be highly purified water, such as pure water and ion-exchanged water, or water normally used, such as tap water, industrial water, agricultural water and groundwater.

### (Iron)

The iron added to the aqueous solution of citric acid is not limited to iron oxide (FeO), but may also be a solid, such as Fe₂O₃ and Fe₃O₄, mainly comprised of iron, and is therefore referred to as solid iron in the present invention. The amount of iron contained in the solid iron is not particularly limited, but 50 mass % or more is preferable (more preferably 65 mass % or more, and still more preferably 95 mass %).

The solid iron can be, for example, steel wool, dust containing iron, scale-like iron scale generated during wire drawing, iron-containing parts of casting sand, and various commercial iron powders. Among these, fine-grained iron powder that is easily dissolved by citric acid is preferred. The amount of solid iron added to the citric acid solution is in the ratio of 1 to 25 solid iron per 100 citric acid water, and iron citrate solutions are prepared in such range.

### (Sodium bicarbonate)

The sodium bicarbonate is a solid or powder comprised mainly of sodium bicarbonate (usually, purity equal to 99% or more), with no particular limitations on particle shape, as long as the purity of the sodium bicarbonate is maintained. Fine particle size is preferred as it is easily dissolved in water.

The sodium bicarbonate is added to the aqueous iron citrate solution and allowed to combine to produce highly stable sodium iron citrate. The increase in pH allows the redox potential to shift to the reduced state, and inhibit the oxidation of ferrous ions (Fe²⁺) to ferric ions (Fe³⁺).

### (Sodium iron citrate)

After an aqueous solution of iron citrate is produced by stirring and mixing citric acid, solid iron and water as described above, by adding solid iron to citric acid dissolved in water beforehand and stirring and mixing, or by adding the required amounts of solid iron and citric acid, and stirring and mixing while heating if required, this aqueous iron citrate solution is mixed with sodium bicarbonate to produce an aqueous solution of sodium iron citrate which has been heated if required. The sodium iron citrate is alkalized to pH 5-8 by the addition of sodium bicarbonate.

In the above, the amounts of citric acid, solid iron and sodium bicarbonate are not particularly limited, but may be arbitrarily determined , for example, within the range of 10 g of citric acid (preferably 15 g to the dissolution limit of citric acid at aqueous solution temperature) per 100 ml of water. The amount of solid iron per 100 ml of water is 5-60 parts by mass when the citric acid content is 100 parts by mass, and the amount of sodium bicarbonate is 80-120 parts by mass when the citric acid content is 100 weight parts.

If undissolved citric acid, solid iron and sodium bicarbonate remain in the aqueous solution of sodium iron citrate obtained by stirring and mixing as described above, the water-insoluble components can be separated and removed by filtration or centrifugal separation. The filtration conditions are not particularly limited, but for example, a membrane filter with a pore diameter of 10 µm or less, more preferably 5 µm or less, and still more preferably 3 µm or less, or a filtration filter may be used.

Water-soluble antifungal agent such as for example wood vinegar (in the case of wood vinegar, 1-10% by mass or less of the iron for growth agent), may be added to the above aqueous sodium iron citrate solution to prevent fungi growth.

As regards the aqueous solution of sodium ferrous citrate, the storage temperature is not particularly limited, but it is preferable to store the solution at a low temperature, for example, 15°C or below. Further, in the case of aqueous solutions of iron for growth agents, their storage in an anaerobic environment is preferred.

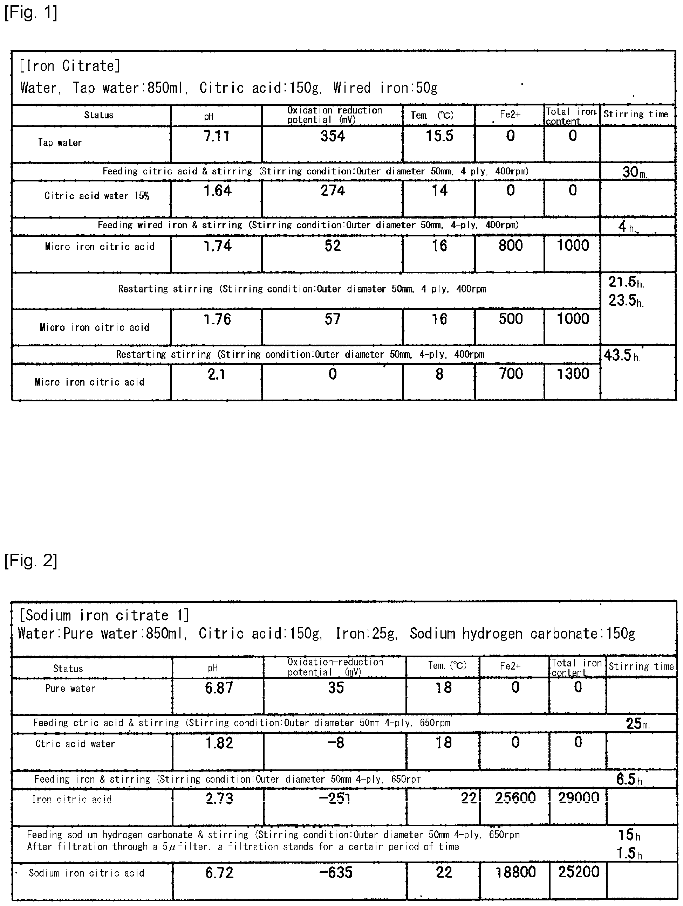

Changes in the concentration of ferrous ions (Fe²⁺) in the various aqueous sodium iron citrate solutions 1 to 3 produced as described above are shown in Figs. 1 to 3. In the aqueous sodium iron citrate solutions 1 to 3 shown in Figs. 1 to 3, high concentrations of ferrous ions (Fe²⁺) were observed.

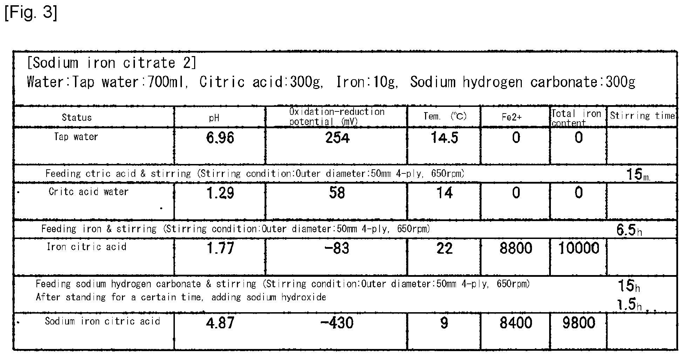

The 'wire drawn iron' as the 'iron' used in the sodium iron citrate shown in Fig. 3 is the cutting iron (scale) that is cut by the die and discharged when iron material is passed through the die to produce iron wire rod.

### [Magnesium lignin sulfonate].

The iron supply growth agent is prepared by mixing magnesium lignin sulfonate as a chelating agent with the above aqueous solution of sodium iron citrate to produce the iron supply agents. The mixing ratio of magnesium lignin sulfonate is 10-100 parts by mass, or more preferably 20-50 parts by mass, when sodium iron citrate is 100 parts by mass.

Magnesium lignin sulfonate used as a chelating agent is produced by adding magnesium to lignin waste solution (lignin sulfonic acid solution) from the lignin waste solution discharged as industrial waste in the paper manufacturing process. The magnesium lignin sulfonate has high dispersibility and caking capacity, and has a high chelating power to retain ferrous ions (Fe²⁺) in aqueous sodium iron citrate solution. Magnesium lignin sulfonate is also an industrial waste material that is discharged from the chip during the papermaking process, thus it has the characteristic of realizing cost reduction.

The iron supply agent may be in the form of an aqueous solution diluted to the required concentration, in the form of a solid supported on a porous carrier such as microporous materials including activated carbon and zeolite, macroporous materials including pumice stone, or mixed with a biodegradable bulking agent. In any case, when the iron supply agent is 100% by mass, it must contain from 5-95 % by mass, preferably 50% mass or less, and more preferably 30 % by mass of sodium iron citrate (equivalent to total dry mass).

In addition to the above sodium iron citrate, the iron supply agent may contain other components, such as lipoic acid, various vitamins, Mn, Zn, Cu, Cr, Si, Mg, Ca, Co, Mo, Ni, B and the like, water-soluble compounds of S and Cl and the like, water-soluble metal salts and the like, or bulking agents either as a single component or a complex. The other ingredients contained should preferably be 30 parts by mass or less when sodium iron citrate is 100 parts by mass. As bulking agents, zeolite, compost, clay, peat, rice husk, diatomaceous earth, biodegradable resin and the like, are suitable.

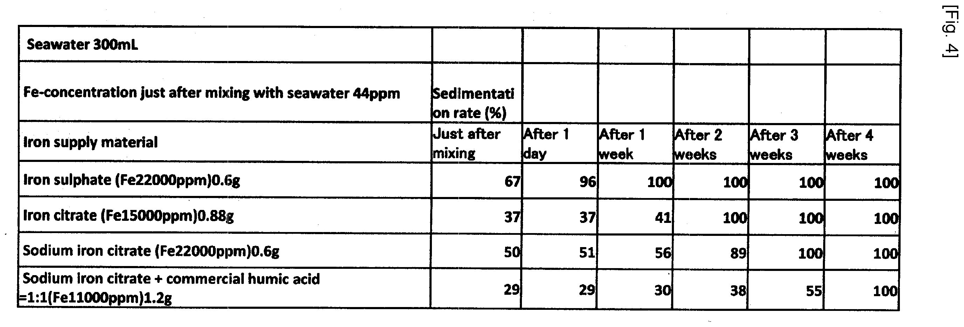

Next, aqueous state (precipitation state) of each aqueous solution of iron sulfate, iron citrate, sodium iron citrate and (sodium iron citrate + humic acid) (fulvic acid + humic acid), which are conventionally used as iron supply agents, is described referring to Fig. 4.

### [Iron sulfate solution]

A 0.6 mL aqueous iron sulfate solution (Fe concentration: 22,000 ppm) was mixed with 300 mL of seawater to prepare an aqueous solution with the Fe concentration of 44 ppm in seawater, and the Fe concentration in the solution was measured to determine the Fe sedimentation rate.

In this solution, 67% of the Fe precipitated immediately after mixing the iron sulfate solution with seawater, and almost all of Fe was precipitated after one day.

Based on this fact, aqueous iron sulfate solutions were judged to be unsuitable as an iron supply agent in seawater.

### [Aqueous iron citrate solution].

A 0.88 mL aqueous iron citrate solution (Fe concentration: 15,000 ppm) was mixed with 300 mL of seawater to prepare an aqueous solution with the Fe concentration of 44 ppm in seawater, and the Fe concentration in the solution was measured to determine the Fe sedimentation rate.

In this solution, 37% of the Fe precipitated immediately after mixing the aqueous iron citrate solution with seawater, and almost all of Fe was precipitated after 10 days.

Based on this fact, the aqueous iron citrate solution was judged to be unsuitable as an iron supply agent in seawater.

### [Sodium iron citrate solution].

A 0.6 mL of sodium iron citrate solution (Fe concentration: 22000 ppm) was mixed with 300 mL of seawater to prepare an aqueous solution with the Fe concentration of 44 ppm in seawater, and the Fe concentration in the solution was measured to determine the Fe sedimentation rate.

In this solution, 50% of the Fe precipitated immediately after mixing the sodium iron citrate solution with seawater, and almost all of Fe was precipitated after 14 days.

Based on this fact, the aqueous solution of sodium iron citrate was judged to be unsuitable as an iron supply agent in seawater.

### [(Sodium iron citrate + humic acid) aqueous solution]

Sodium iron citrate and humic acid were mixed at a ratio of 1:1 to prepare an aqueous solution with a Fe concentration of 11000 ppm. A 1.2 mL of this (sodium iron citrate + humic acid) solution was mixed with 300 mL of seawater to prepare an aqueous solution with the Fe concentration of 44 ppm in seawater, and the Fe concentration in the solution was measured to determine the Fe precipitation rate.

In this solution, 30% of the Fe precipitated immediately after mixing the aqueous solution of (sodium iron citrate + humic acid) with seawater, and almost all of Fe was precipitated after 25 days.

From this fact, it was judged that the (sodium iron citrate + humic acid) aqueous solution is insufficient as an iron supply agent because of its high precipitation rate immediately after mixing, although its rate is lower than that of the above iron sulfate, iron citrate, and sodium iron citrate.

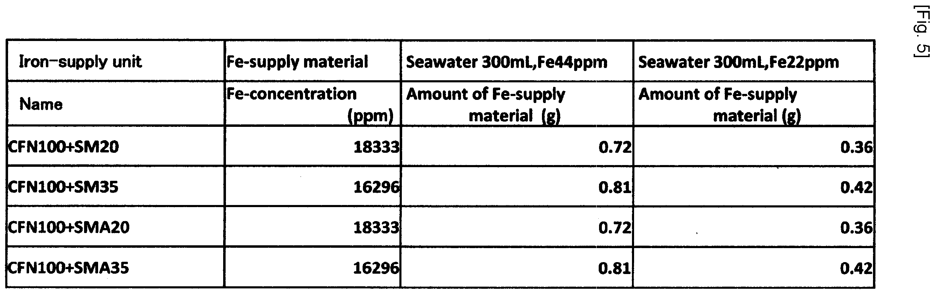

Next, the aqueous state (precipitation rate) of the iron supply agent in which magnesium lignin sulfonate (SM in the figure) and magnesium lignin sulfonate subcritical (i.e., Subcritical treated magnesium lignin sulfonate, SMA in the figure) are respectively mixed into the present sodium iron citrate (CFN in the figure) is explained with reference to Figs. 5 to 7.

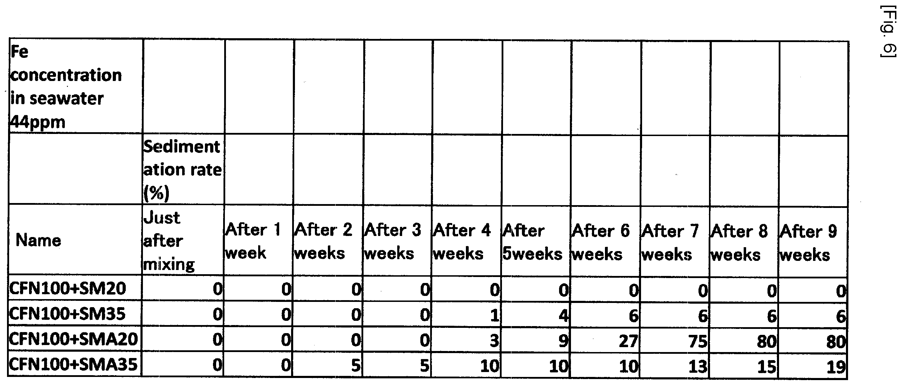

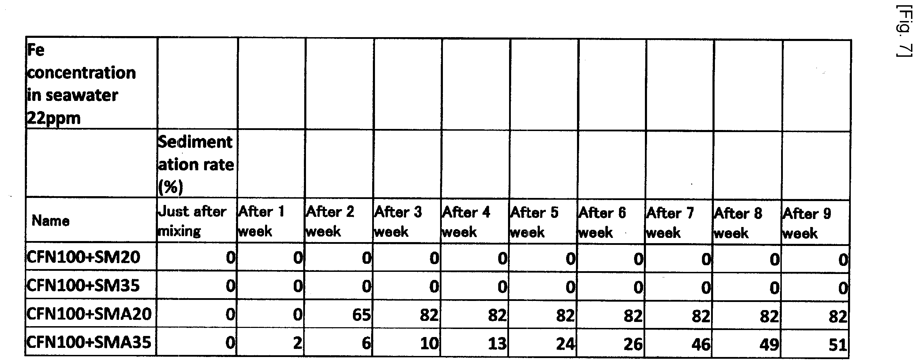

For the iron supply agents shown in Figs. 6 and 7, magnesium lignin sulfonate and magnesium lignin sulfonate subcritical were mixed at 20 and 35 parts by mass, respectively, with 100 parts by mass of sodium iron citrate.

In Figs. 5 to 7, sodium iron citrate (100 parts by mass) + magnesium lignin sulfonate (20 parts by mass) is CFN100 + SM20, sodium iron citrate (100 parts by mass) + magnesium lignin sulfonate (35 mass parts) is CFN100 + SM35, sodium iron citrate (100 parts by mass) + magnesium lignin sulfonate subcritical (20 parts by mass) is CFN100 + SMA20, sodium iron citrate (100 parts by mass) + magnesium lignin sulfonate subcritical (35 parts by mass) is CFN100 + SMA35. CFN100 + SM20 and CFN100 + SMA20 had Fe concentrations of 18333 ppm, and CFN100 + SM35 and CFN100 + SMA35 had Fe concentrations of 16296 ppm, respectively.

As shown in Fig. 5, CFN100 + SM20 and CFN100 + SMA20 were mixed with 300 mL of seawater at 0.72 g and 0.36 g, respectively, to achieve Fe concentrations of 44 ppm and 22 ppm in seawater, respectively, and CFN100 + SM35 and CFN100 + SMA35) at 0.81 g and 0.42 g, respectively, were mixed to achieve Fe concentrations of 44 ppm and 22 ppm in seawater, respectively.

Fig. 6 shows the results of Fe precipitation rates measured over 9 weeks in seawater mixed with CFN100 + SM20, CFN100 + SMA20, CFN100 + SM35, and CFN100 + SMA35, respectively, where the Fe concentration is adjusted to 44 ppm.

As shown in Fig. 6, all iron supply agents did not precipitate immediately after mixing with seawater, and after 9 weeks there was almost no precipitation except for CFN100 + SMA20.

Fig. 7 shows the results of Fe precipitation rates measured over 9 weeks in seawater mixed with CFN100 + SM20, CFN100 + SMA20, CFN100 + SM35, and CFN100 + SMA35, respectively, where the Fe concentration is adjusted to 22 ppm.

As shown in Fig. 7, all the iron supply agents did not precipitate immediately after mixing with seawater, and after 9 weeks there was almost no precipitation except for CFN100 + SMA20 and CFN100 + SMA35.

The results of the above measurements show that the Fe concentration in seawater was able to maintain at a high level for a long period of time using the iron supply agent of the present invention, in which magnesium lignin sulfonate was mixed with sodium iron citrate.

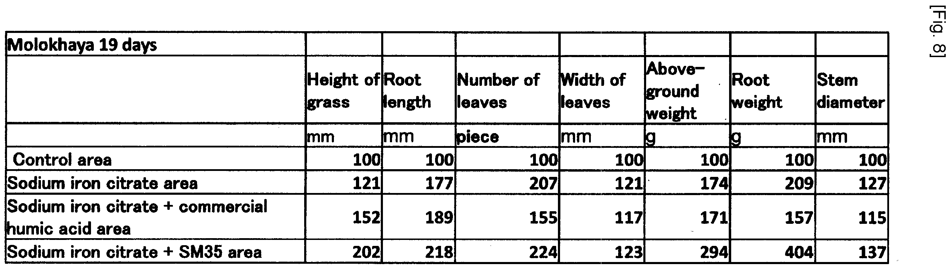

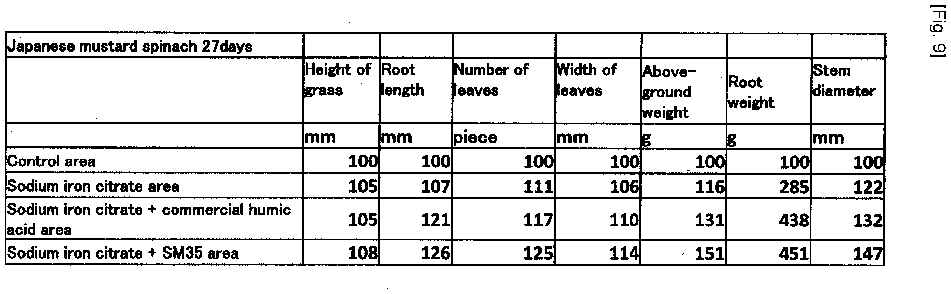

In the following Comparative Examples 1 and 2, plants were irrigated with the iron supply agents of the present invention, as shown in Figs. 8 and 9.

### [Comparative Example 1]

Fig. 8 shows the indices of above-ground height, root length, number of leaves, leaf width, above-ground weight, root weight and stem diameter of molokheiya plants cultivated for 19 days with CFN100 + SM35 as the iron supply agent of the present invention and compared to those of plant cultivated with sodium iron citrate or sodium iron citrate + humic acid, and those indices of control plants are expressed as 100. The irrigation conditions were once weekly using a 1000-fold dilution of each iron supply agent.

In the cases wherein CFN100 + SM35 was irrigated as the iron supply agent of the present invention, higher indices were observed for all items compared to sodium iron citrate and sodium iron citrate + humic acid, suggesting that high concentrations of Fe ions are maintained in the irrigated iron supply agent solution for a long time. The results are considered to indicate that high concentrations of Fe ions are maintained in the irrigated iron supply agent solution for a long time.

### [Comparative Example 2]

Fig. 9 shows the indices of above-ground height, root length, number of leaves, leaf width, above-ground weight, root weight and stem diameter of komatsuna plants (Japanese mustard spinach) cultivated for 27 days with CFN100 + SM35 and CFN100 + SMA35 as iron supply agents of the present invention and compared to those of plant cultivated with sodium iron citrate, and those indices of control plants are expressed as 100. The irrigation conditions were once weekly using a 1000-fold dilution of each iron supply agent.

In all cases where CFN100 + SM35 and CFN100 + SMA35 were irrigated as the iron supply agent of the present invention, the indices of all items were higher than those for sodium iron citrate, indicating that a high concentration of Fe ions is maintained in the irrigated iron supply solution for a long period of time.

In this example, magnesium lignin sulfonate, produced by adding magnesium to lignin waste liquid and which is conventionally discarded, is used as a chelating agent mixed with sodium citrate, thereby reducing the cost compared to using fulvic acid or humic acid.

Compared to the use of humic acid produced from humic substances as a chelating agent, this also avoids the generation of large amounts of humic substance residues as industrial waste, which contributes to lower cost of the iron supply agent.

## Claims

1. An iron supply agent for plant growth that provides iron, a trace element essential for the growth of marine and terrestrial plants, comprising a sodium ferrous citrate solution prepared by combining sodium bicarbonate with ferrous citrate, wherein citric acid, water and iron are stir-mixed with aqueous citric acid solutions containing from 10 g of citric acid (100% purity equivalent) to weight of citric acid dissolution limit of the water temperature per 100 ml of water and iron (equivalent to 100% purity) at a ratio of 5~60 mass parts when the citric acid content is 100 mass parts to obtain iron citrate, wherein sodium bicarbonate (equivalent to 100% purity) is combined at a ratio of 80~120 mass parts per 100 ml of water when the citric acid content is 100 mass parts, thereby producing an aqueous solution of sodium iron citrate, and a chelating agent mixed with said aqueous solution of sodium iron citrate, **characterized in that** said chelating agent is lignin sulfonic acid derived from lignin waste.

2. The iron supply agent for plant growth according to claim 1, wherein said chelating agent is magnesium lignin sulfonate, which is magnesium added to lignin sulfonic acid produced by hydrolyzing and sulfonating the lignin contained by subcritical treatment of wood chips.

3. The iron supply agent for plant growth according to claim 1, wherein said chelating agent is magnesium lignin sulfonate subcritical, and wherein the magnesium lignin sulfonate produced according to claim 2 has been further subcritically treated.

4. The iron supply agent for plant growth according to any of claim 2 and 3, wherein the amount of said magnesium lignin sulfonate is 10 to100 parts by mass relative to 100 parts by mass of said sodium iron citrate.

5. The iron supply agent for plant growth according to claim 1, wherein said iron citrate is **characterized by** citric acid (100% purity equivalent), water (100% purity equivalent) and iron (100% purity equivalent) in the ratio of 8-40: 1-25: 60-90, respectively.

6. The iron supply agent for plant growth according to claim 1, wherein the iron content is 50 mass % or more solid iron.

7. The iron supply agent for plant growth according to claim 1, wherein an antifungal agent is added to the aqueous sodium iron citrate solution.

8. The iron supply agent for plant growth according to claim 7, wherein the amount of said antifungal agent is 10 mass % or less relative to the total aqueous solution of sodium iron citrate.
